# EUROPÄISCHE PATENTANMELDUNG

(11) **EP 3 489 871 A1**
(43) Veröffentlichungstag der Anmeldung: **29.05.2019**
(21) Anmeldenummer: 17203158.5
(22) Anmeldetag: 22.11.2017
(51) Int. Cl.: G06Q 10/08

(54) **TRAGBARES SYSTEM ZUM UNTERSTÜTZEN EINES ZUSTELLERS EINER PAKETLIEFERUNG, VERFAHREN UND COMPUTERPROGRAMMPRODUKT**

(71) Anmelder: Deutsche Telekom AG, 53113 Bonn (DE)
(72) Erfinder: BAER, Detlef, 01099 Dresden (DE); RICHTER, Steffen, 01307 Dresden (DE)
(74) Vertreter: Patentship Patentanwaltsgesellschaft mbH

(57) **Zusammenfassung**

Die Erfindung betrifft ein tragbares System 100 zum Unterstützen eines Zustellers 200 einer Paketlieferung 201 in einem Fahrzeuginnenraum 202 eines Zustellfahrzeugs bei Auslieferung der Paketlieferung 201. Das tragbare System 100 hat einen Speicher 102, in welchem eine Positionsinformation über eine Position der Paketlieferung 201 in dem Fahrzeuginnenraum 202 gespeichert ist und eine Sensoranordnung 101, die dazu eingerichtet ist, eine Ausrichtung des tragbaren Systems 100 in dem Fahrzeuginnenraum 202 erfassen. Das tragbare System 100 hat des Weiteren einen Prozessor 103, welcher ausgebildet ist, eine relative Position der Paketlieferung 201 in Abhängigkeit von der Positionsinformation sowie der erfassten Ausrichtung zu erfassen und eine Anzeige 104, welche ausgebildet ist, die erfasste relative Position darzustellen. Die Erfindung betrifft des Weiteren ein Verfahren und ein Computer-Programm-Produkt.

## Beschreibung

Die Erfindung betrifft ein tragbares System zum Unterstützen eines Zustellers einer Paketlieferung in einem Fahrzeuginnenraum eines Zustellfahrzeugs bei Auslieferung der Paketlieferung. Die Erfindung betrifft des Weiteren ein Verfahren und ein Computerprogrammprodukt.

Mit zunehmendem Online-Versand werden immer mehr Paketlieferungen versendet. Die Auslieferung solcher Paketlieferungen übernimmt ein Zustelldienst, der Zusteller beschäftigt, die mit Zustellfahrzeugen von einem Paketempfänger zum nächsten fahren und die Paketlieferungen zustellen.

Durch die steigende Anzahl an Paketlieferungen stehen die Zusteller unter zunehmendem Zeitstress, alle Pakete rechtzeitig auszuliefern. Gleichzeitig sind in den Zustellfahrzeugen die Anzahl der Paketlieferungen größer als früher, so dass das Finden einer bestimmten Paketlieferung unter anderen Paketlieferungen erschwert wird. Das Suchen einer bestimmten Paketlieferung zu verkürzen, kann eine Erleichterung für den Zusteller bedeuten.

Es ist Aufgabe der Erfindung, ein Konzept zum Unterstützen eines Zustellers einer Paketlieferung bereitzustellen.

Die Aufgabe wird durch die Merkmale der unabhängigen Patentansprüche gelöst. Weitere Ausführungsarten sind in den abhängigen Patentansprüchen, der Beschreibung sowie in den Figuren beschrieben.

Gemäß einem ersten Aspekt wird die Aufgabe durch ein tragbares System zum Unterstützen eines Zustellers einer Paketlieferung in einem Fahrzeuginnenraum eines Zustellfahrzeuges bei Auslieferung der Paketlieferung gelöst. Es umfasst einen Speicher, in welchem eine Positionsinformation über eine Position der Paketlieferung in dem Fahrzeuginnenraum gespeichert ist. Das tragbare System umfasst des Weiteren eine Sensoranordnung, die dazu eingerichtet ist, eine Ausrichtung des tragbaren Systems in dem Fahrzeuginnenraum zu erfassen, und einen Prozessor, welcher ausgebildet ist, eine relative Position der Paketlieferung in Abhängigkeit von der Positionsinformation sowie der erfassten Ausrichtung zu erfassen. Das tragbare System umfasst des Weiteren eine Anzeige, die dazu ausgebildet ist, die erfasste relative Position darzustellen.

Die Darstellung kann als eine erweiterte Realität, auch engl. Augmented Reality, kurz AR, erfolgen und kann das Darstellen von Informationen als Überlagerung einer realen Umgebung oder als Ergänzung einer Darstellung einer Umgebung umfassen.

Der Zusteller kann eine Person, insbesondere ein Angestellter eines Lieferdienstes sein. Die Paketlieferung kann ein Paket sein, das von dem Lieferdienst an einen Empfänger zugestellt werden soll. Das Zustellfahrzeug ist beispielsweise ein an sich bekannter Lieferwagen eines Paketzustellers. In dem Fahrzeuginnenraum des Zustellfahrzeugs können Regale angeordnet sein, die dafür gedacht sind, die Paketlieferungen aufzubewahren.

Der Speicher kann in dem tragbaren System angeordnet sein. Der Speicher kann ein elektronischer Speicher sein. Eine Datenbank die Zustellinformationen umfasst kann mit dem Speicher über eine Datennetzwerkverbindung verbunden sein, sodass der Speicher Daten, insbesondere Positionsinformationen, aus der Datenbank abrufen oder in die Datenbank schreiben kann. Der Speicher kann ein flüchtiger Speicher sein, der die Daten zwischenspeichert. Der Speicher kann auch ein nichtflüchtiger Speicher sein, der die Daten länger speichert, als für die aktuelle Bearbeitung nötig. Beispielsweise werden in dem Speicher alle Daten für einen Tag gespeichert, die Informationen zu allen Paketlieferungen umfassen, die einem Zusteller bzw. einem Zustellfahrzeug zugeordnet sind.

Der Speicher umfasst Positionsinformationen über eine Position der Paketlieferung in dem Fahrzeuginnenraum. Beispielsweise umfasst der Speicher hierfür Relativkoordinaten, die von einem vordefinierten Punkt in dem Fahrzeuginnenraum ausgehen. Die Positionsinformation kann auch eine Positionsnummer sein, wie beispielsweise eine Nummer, die einem Regalfach zugeordnet ist.

Die Sensoranordnung dient dazu, eine Ausrichtung des tragbaren Systems in dem Fahrzeuginnenraum zu erfassen. Hierbei wird davon ausgegangen, dass der Zusteller die Richtung anvisiert, in die das tragbare System zeigt. Beispielsweise hält der Zusteller das tragbare System in eine Richtung und schaut dabei durch das tragbare System hindurch oder über das tragbare System hinweg. Die Sensoranordnung kann eine Markierung an dem tragbaren System und/oder Sensoren, wie Kameras, zur Erfassung des tragbaren Systems umfassen.

Die Anzeige kann eine transparente Scheibe, insbesondere eine Glasscheibe, sein, auf die Daten aufprojiziert werden. Ebenso kann die Anzeige ein Bildschirm sein, der ein Bild elektronisch anzeigt.

Durch das beschriebene tragbare System kann der Zusteller leichter eine Position, die einer Paketlieferung zugeordnet ist, in dem Fahrzeuginnenraum finden. Dies beschleunigt das Auffinden und so das Zustellen der Paketlieferung.

Gemäß einer Ausgestaltung umfasst das tragbare System eine Datenbrille.

Eine Datenbrille vereint elektronische Komponenten mit einer transparenten Scheibe, insbesondere einem Brillenglas, die beispielsweise als Anzeige dienen kann und lässt sich so tragen, dass die Hände frei bleiben um beispielsweise eine Paketlieferung zu halten. Die Datenbrille kann die Sensoranordnung, den Prozessor und die Anzeige umfassen. Zusätzlich kann die Datenbrille den Speicher umfassen.

Gemäß einer Ausgestaltung ist die Anzeige zumindest teilweise transparent.

Die Transparenz der Anzeige ermöglicht es, dass angezeigte Informationen in einer Blickrichtung dargestellt werden, die bei einer Betrachtung der Umgebung eine Überlagerung der Informationen mit der realen Umgebung bildet. So kann eine erweiterte Realität erzeugt werden.

Gemäß einer Ausgestaltung ist die Anzeige elektronisch und dazu eingerichtet, eine Darstellung des Fahrzeuginnenraums in Abhängigkeit der Ausrichtung des tragbaren Systems und eine Überlagerung der relativen Position elektronisch darzustellen.

Die Anzeige kann die reale Umgebung als virtuelle Umgebung anzeigen und in der virtuellen Umgebung die Informationen bereitstellen. Die Anzeige kann zusätzlich eine Transparenz oder eine Teiltransparenz aufweisen, sodass eine Orientierung in der realen Umgebung leichter fällt. Beispielsweise umfasst die Anzeige hierbei eine dünne LED-Anzeige, insbesondere OLED-Anzeige, die aufgrund ihrer geringen Dicke transparente Eigenschaften aufweisen kann. Alternativ oder zusätzlich kann die Anzeige in transparente und nicht transparente Bereiche unterteilt sein.

Gemäß einer Ausgestaltung umfasst die Anzeige einen Lautsprecher, wobei die Anzeige dazu eingerichtet ist, die die erfasste relative Position durch akustische Signale darzustellen.

Die Anzeige kann einen Lautsprecher umfassen, beispielsweise Kopfhörer. Über die Lautsprecher kann die Anzeige Hinweise akustisch anzeigen. Hierfür kann die Anzeige einen akustischen Ton ausgeben, der beispielsweise lauter wird oder die Frequenz ändert, je geringer die Distanz der Sensoranordnung zur Position der Paketlieferung wird.

Gemäß einer Ausgestaltung umfasst die Anzeige ein Brillenglas oder eine Kontaktlinse oder ein Headset.

Mit diesen Mitteln ist es möglich, die Anzeige vor dem Auge anzuordnen. Dies vereinfacht eine Handhabung des tragbaren Systems.

Gemäß einer Ausgestaltung umfasst die Positionsinformation eine Ist-Position, an der die Paketlieferung angeordnet ist. Die Anzeige ist hierbei dazu eingerichtet, die relative Position anzuzeigen, um einen Lagerort der Paketlieferung anzuzeigen.

Ist die Paketlieferung in dem Fahrzeuginnenraum gelagert, so wird durch das tragbare System angezeigt, an welchem Ort sich die Paketlieferung befindet. Hierdurch kann ein Zusteller die Paketlieferung einfach finden und zum Ausliefern abholen. Die Ist-Position ist hierbei die Position, an der sich die Paketlieferung befindet. Das heißt, dies ist die Position, zu der das tragbare System in dem Speicher hinterlegt hat, dass die Paketlieferung dort angeordnet ist.

Gemäß einer Ausgestaltung umfasst die Positionsinformation eine Soll-Position, an der die Paketlieferung anordenbar ist. Die Anzeige ist hierbei dazu eingerichtet, die relative Position anzuzeigen, um einen vorbestimmten Lagerort der Paketlieferung anzuzeigen, an dem die Paketlieferung gelagert werden soll.

Ist die Paketlieferung noch nicht in das Zustellfahrzeug einsortiert, d.h. ist eine Ist-Position der Paketlieferung noch nicht in dem tragbaren System gespeichert, so ist davon auszugehen, dass die Paketlieferung nicht in dem Zustellfahrzeug angeordnet ist. Dem Zusteller kann als Lagerort der Paketlieferung vorgegeben werden, wo die Paketlieferung angeordnet werden soll. Ordnet der Zusteller die Paketlieferung dann an der Soll-Position an, so kann dies durch das tragbare System automatisch oder manuell erfasst werden und die Soll-Position wird zur Ist-Position. So kann die Paketlieferung später schnell gefunden werden.

Gemäß einer Ausgestaltung ist die Sensoranordnung dazu eingerichtet, eine Umgebung des tragbaren Systems zu erfassen. Der Prozessor ist hierbei dazu eingerichtet, Strukturen in der erfassten Umgebung zu erkennen und einen Gefahrenhinweis für eine Struktur bereitzustellen, die einer Gefahr für den Zusteller zuordenbar ist. Die Anzeige ist hierbei dazu eingerichtet, den Gefahrenhinweis darzustellen.

Die Sensoranordnung kann Strukturen der Umgebung erkennen. Beispielsweise kann eine Kamera der Sensoranordnung Kontrastkanten erfassen oder eine 3D Kamera der Sensoranordnung Diskontinuitäten von Abständen von erfassten Strukturen erkennen. Strukturen mit solchen oder anderen vorbestimmten Eigenschaften können auf Schwellen, Treppenstufen oder Pfosten hinweisen, die beispielsweise eine Stolperfalle für den Zusteller darstellen. Diese Informationen können auf der Anzeige als Gefahrenhinweis, beispielsweise eine Markierung in einer Signalfarbe oder ein Symbol wie ein Ausrufezeichen, dargestellt werden, um den Zusteller zu warnen. Durch eine Interpolation der Bewegung des Zustellers kann dieser Gefahrenhinweis auch angezeigt werden, wenn der Blick des Zustellers und gegebenenfalls die Sensoranordnung die betreffende Struktur nicht direkt erfassen kann, weil beispielsweise die Paketlieferung zwischen Augen bzw. Sensoranordnung und der betreffenden Struktur angeordnet ist.

Gemäß einer Ausgestaltung ist die Sensoranordnung dazu eingerichtet, eine Umgebung des tragbaren Systems zu erfassen. Der Prozessor ist hierbei dazu eingerichtet, Schriftzüge in der erfassten Umgebung zu erkennen, die Schriftzüge mit einem der Paketlieferung zugeordneten Namen abzugleichen und einen Hinweis bereitzustellen, wenn der Name an einem Schriftzug erkannt wurde. Hierbei ist die Anzeige dazu eingerichtet, den Hinweis darzustellen.

Auf diese Weise kann das Auffinden eines Klingelschilds oder eines Briefkastens des Empfängers der Paketlieferung vereinfacht werden, insbesondere bei Hochhäusern mit sehr vielen Bewohnern. Dies erspart eine zeitraubende Suche durch den Zusteller.

Gemäß einer Ausgestaltung ist die Sensoranordnung dazu eingerichtet, einen Erkennungscode der Paketlieferung zu erfassen, der der Paketlieferung zugeordnet ist, wenn die Sensoranordnung den Erkennungscode in einem vorbestimmten Abstand zur Sensoranordnung und/oder für eine vorbestimmte Zeit und/oder in einer vorbestimmten Position relativ zu der Sensoranordnung erfasst. Hierbei ist der Prozessor dazu eingerichtet, einen Bestätigungshinweis zu generieren, wenn der Erkennungscode der auszuliefernden Paketlieferung erfasst wurde. Die Anzeige ist hierbei dazu eingerichtet, den Bestätigungshinweis darzustellen.

Durch Fixeren oder Anvisieren des Erkennungscodes der Paketlieferung, wie beispielsweise einer Typenbezeichnung oder eines 2D oder 3D Codes auf der Paketlieferung kann der Zusteller überprüfen, ob die anvisierte Paketlieferung tatsächlich die gesuchte Paketlieferung ist. Hierzu muss er keine Nummern vergleichen, sondern kann direkt von der Anzeige eine Bestätigung, wie beispielsweise einen grünen Haken oder ein Plus-Symbol, ablesen.

Gemäß einer Ausgestaltung weist das tragbare System einen Erfassungssensor zum Erfassen der Position der Paketlieferung in dem Fahrzeuginneren auf. Der Erfassungssensor umfasst hierbei insbesondere eine Kamera und/oder einen RFID-Sensor.

Ist die Paketlieferung nicht mittels des tragbaren Systems in das Fahrzeuginnere eingebucht worden, so weiß das tragbare System nicht zwingend, wo sich die Paketlieferung in dem Fahrzeuginneren befindet. Durch Suchen der Paketlieferung mit einer Kamera oder einem RFID-Sensor kann ein solches Problem umgangen werden.

Gemäß einer Ausgestaltung umfasst die Sensoranordnung einen Positionssensor, der dazu eingerichtet ist, eine Position des tragbaren Systems außerhalb des Fahrzeuginnenraums zu erfassen.

Der Positionssensor kann einen GPS oder GALILEO Empfänger umfassen, um Geokoordinaten zu empfangen. So kann das tragbare System auch außerhalb des Fahrzeuginnenraumes eine Position erfassen. Dies ermöglicht eine Unterstützung des Zustellers außerhalb des Fahrzeuginnenraumes, beispielsweise auf einem Fußweg bis zur Übergabe der Paketlieferung an einen Empfänger.

Gemäß einem zweiten Aspekt der Erfindung wird die Aufgabe durch ein Verfahren zum Unterstützen eines Zustellers einer Paketlieferung in einem Fahrzeuginnenraum eines Zustellfahrzeugs bei Auslieferung der Paketlieferung durch ein tragbares System gelöst. Das Verfahren umfasst:
Auslesen einer Positionsinformation über eine Position der Paketlieferung in dem Fahrzeuginnenraum aus einem Speicher des tragbaren Systems;
Erfassung einer Ausrichtung des tragbaren Systems in dem Fahrzeuginnenraum durch eine Sensoranordnung des tragbaren Systems;
Erfassen einer relativen Position der Paketlieferung in Abhängigkeit von der Positionsinformation sowie der erfassten Ausrichtung durch einen Prozessor des tragbaren Systems;
Darstellen der erfassten relativen Position durch eine Anzeige des tragbaren Systems.

Gemäß einem dritten Aspekt wird die Aufgabe durch ein Computerprogrammprodukt gelöst, das Programmcode zur Ausführung des oben beschriebenen Verfahrens aufweist, wenn der Programmcode auf einem Computersystem ausgeführt wird.

Die Erfindung wird im Folgenden anhand von weiteren Ausführungsbeispielen und den Figuren näher erläutert. In den Figuren zeigen:
- Fig. 1: eine schematische Darstellung eines tragbaren Systems gemäß einer Ausgestaltung der Erfindung;
- Fig. 2a: eine schematische Darstellung einer Umgebung und eines tragbaren Systems gemäß einer Ausgestaltung der Erfindung;
- Fig. 2b: eine weitere schematische Darstellung einer Umgebung und eines tragbaren Systems gemäß einer Ausgestaltung der Erfindung;
- Fig. 3: eine weitere schematische Darstellung einer Umgebung und eines tragbaren Systems gemäß einer Ausgestaltung der Erfindung; und
- Fig. 4: eine schematische Darstellung eines Flussdiagramms für ein Verfahren gemäß einer Ausgestaltung der Erfindung.

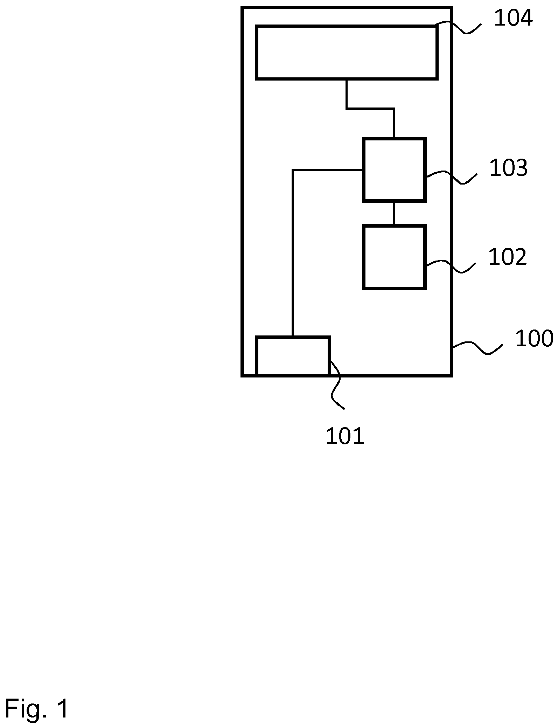

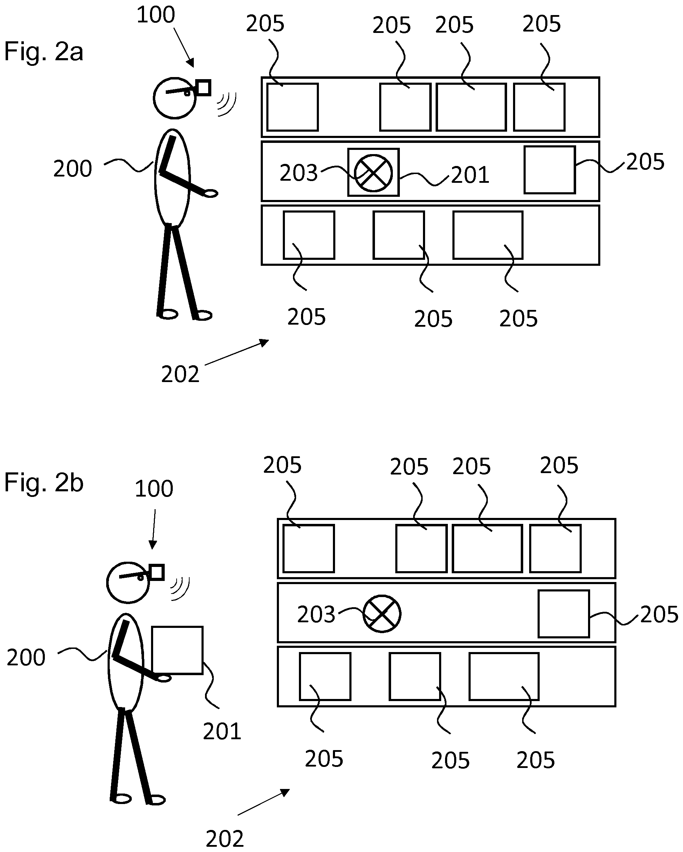

Fig. 1 zeigt eine schematische Darstellung eines tragbaren Systems 100. Das tragbare System kann beispielsweise in einem Fahrzeuginnenraum 202 eines Zustellfahrzeugs von einem Zusteller 200 eingesetzt werden, wie in den Figuren 2a und 2b dargestellt (siehe unten).

Das tragbare System 100 ist im beschriebenen Ausführungsbeispiel eine Datenbrille. In weiteren Ausführungsbeispielen kann es sich um ein anderes tragbares Computersystem handeln. Beispielsweise handelt es sich bei dem tragbaren Computersystem um ein Headset oder eine Kontaktlinse in Kombination mit einem Prozessor, die miteinander über Funk in Verbindung stehen. In einer weiteren Ausgestaltung kann es sich auch um ein tragbares Computersystem handeln, das in einer Hand des Trägers gehalten wird, beispielsweise ein Smartphone oder ein anderes Handgerät handeln.

Tragbar heißt, dass das tragbare System 100 von einem Zusteller 200 (in Figur 1 nicht dargestellt) einer Paketlieferung getragen werden kann. Hierbei kann das tragbare System 100 an dem Zusteller 200 angeordnet sein, sodass dieser seine Hände frei nutzen kann, beispielsweise als sogenanntes Wearable. Das tragbare System 100 kann aber auch von dem Zusteller 200 in einer Hand gehalten werden. Tragbar heißt demnach, dass es sowohl in Größe als auch nach dem Gewicht des tragbaren Systems 100 von einem Zusteller eines Paketlieferdienstes getragen werden kann, insbesondere so getragen werden kann, dass der Zusteller durch das Tragen des tragbaren Systems 100 bei seiner Zustelltätigkeit physisch nicht wesentlich behindert wird.

Das tragbare System 100 weist eine Sensoranordnung 101 auf. In dem beschriebenen Ausführungsbeispiel umfasst die Sensoranordnung 101 wenigstens einen Beschleunigungssensor zum Erfassen einer Ausrichtung des tragbaren Systems 100. Die Ausrichtung umfasst hierbei eine örtliche Position des tragbaren Systems 100 sowie eine Lage des tragbaren Systems 100, insbesondere eine Neigung. Durch die erfasste Ausrichtung lässt sich also der Ort des tragbaren Systems 100 erfassen und in welche Richtung das tragbare System 100 gerichtet ist.

Des Weiteren umfasst die Sensoranordnung 101 einen Sensor, der dazu eingerichtet ist, eine relative Position des tragbaren Systems 100 in einem Fahrzeuginnenraum 202 eines Zustellfahrzeugs (in Fig. 1 nicht dargestellt) zusätzlich als Ausrichtung des tragbaren Systems 100 zu erfassen. Die relative Position bezieht sich herbei auf den Ort des tragbaren Systems 100 innerhalb des Fahrzeuginnenraums 202, also beispielsweise einen Abstand der Sensoranordnung von einer oder mehreren Seitenwänden oder von vorbestimmten Messpunkten.

Im beschriebenen Ausführungsbeispiel weist die Sensoranordnung 101 des tragbaren Systems 100 ein Funkmodul auf, das Funksignale empfangen und gegebenenfalls auch senden kann. Das Funkmodul ist dazu eingerichtet, ein Peilungssignal zu empfangen, das eine Positionsbestimmung innerhalb des Fahrzeuginnenraums 202 ermöglicht. Das Peilungssignal wird von dem Funkmodul ausgesendet und von Markierungen in dem Fahrzeuginnenraum 202 reflektiert, bzw. zurückgesendet. Durch die Laufzeitunterschiede und/oder in dem Peilungssignal enthaltenen Informationen kann das tragbare System 100 die Position in dem Fahrzeuginnenraum 202 festlegen. Insbesondere wird das Peilungssignal von dem Funkmodul der Sensoranordnung 101 ausgesendet. In einer weiteren Ausgestaltung wird das Peilungssignal von Sendern in dem Fahrzeuginnenraum 202 ausgesendet. In noch einer weiteren Ausgestaltung umfasst die Sensoranordnung eine Markierung und die Positionsbestimmung findet durch ein Funkmodul in dem Fahrzeuginnenraum 202 statt, wobei die Markierung an dem tragbaren System 100 zum Erkennen des tragbaren Systems 100 dient.

Das tragbare System 100 weist einen Speicher 102 auf. Im beschriebenen Ausführungsbeispiel handelt es sich bei dem Speicher 102 um einen nichtflüchtigen Speicherbaustein, welcher in dem tragbaren System 100 integriert ist. In einem weiteren Ausführungsbeispiel handelt es sich bei dem Speicher 102 um eine SSD- oder HDD-Festplatte oder um einen Server, auf den über eine Datennetzwerkverbindung zugegriffen werden kann.

In dem Speicher 102 ist eine Positionsinformation über eine Position einer bestimmten Paketlieferung 201 in dem Fahrzeuginnenraum 202 gespeichert. Die Positionsinformation über eine Position der Paketlieferung 201 beschreibt eine Position in einem Regal in dem Fahrzeuginnenraum 202, in dem die Paketlieferung 201 entweder angeordnet ist oder anordenbar ist. Liegt die Paketlieferung 201 bereits in dem Zustellfahrzeug, so gibt die Positionsinformation an, wo in dem Fahrzeuginnenraum 202 die Paketlieferung 201 angeordnet ist, also eine Ist-Position der Paketlieferung 201. Dies kann beispielsweise durch eine Regalfachnummer verwirklicht werden, wobei die Regale, in denen die Paketlieferungen in dem Zustellfahrzeug liegen, vordefinierte Regalfächer aufweisen und die einzelnen Paketlieferungen in diesen Fächern angeordnet sind. Hierbei können auch mehrere Paketlieferungen in einem Regalfach angeordnet sein. In einem weiteren Ausführungsbeispiel umfasst die Positionsinformation die Anwesenheit eines RFID-Signals an einem Ort. In einem weiteren Ausführungsbeispiel umfasst die Positionsinformation eine Schalterposition, den ein Zusteller beim Einlegen der Paketlieferung manuell aktiviert.

Befindet sich die Paketlieferung noch nicht in dem Fahrzeuginnenraum 202, d. h. sortiert der Zusteller beispielsweise die Paketlieferung in das Zustellfahrzeug ein oder kommt er von einer nicht erfolgreichen Zustellung zurück, so gibt die Positionsinformation die Position in dem Fahrzeuginnenraum 202 an der die Paketlieferung anordenbar ist, also die Soll-Position der Paketlieferung 201. An dieser Soll-Position soll der Zusteller die Paketlieferung 201 ablegen bzw. einsortieren.

Das tragbare System 100 weist des Weiteren einen Prozessor 103 auf. Im beschriebenen Ausführungsbeispiel handelt es sich bei dem Prozessor 103 um einen Mikrocontroller, der in dem tragbaren System 100 angeordnet ist. In einem weiteren Ausführungsbeispiel handelt es sich bei dem Prozessor 103 um eine CPU.

Das tragbare System 100 weist des Weiteren eine Anzeige 104 auf. Die Anzeige 104 ist dazu ausgebildet, dem Zusteller 200 Hinweise anzuzeigen, insbesondre dem Zusteller 200 eine erweiterte Realität anzuzeigen. Im beschriebenen Ausführungsbeispiel handelt es sich bei dem tragbaren System 100 um eine Datenbrille bzw. um eine AR-Brille. Das tragbare System 100 weist hierbei eine transparente Scheibe auf, durch die der Zusteller 200 blicken kann. Somit sieht er durch die transparente Scheibe seine Umgebung wie durch eine rein optische, nicht elektronische Brille, die beispielsweise als Sehhilfe dient. Die transparente Scheibe ist hierbei Teil der Anzeige 104. Durch eine Projektionseinrichtung wird auf die Scheibe eine Information projiziert. Beispielsweise werden Kreuze, Striche, Ausrufezeichen oder andere Hinweise als Information auf die Scheibe der Datenbrille projiziert. In einem weiteren Ausführungsbeispiel handelt es sich bei der Anzeige 104 um ein elektronisches Display, das die Realität als virtuelle Realität darstellt und zusätzlich die vom Prozessor 103 generierten Hinweise anzeigen kann.

Fig. 2a zeigt schematisch den Zusteller 200 und den Fahrzeuginnenraum 202 des Zustellfahrzeugs. Der Zusteller 200 trägt das tragbare System 100. Das tragbare System 100 ist in diesem Ausführungsbeispiel als Datenbrille ausgestaltet und wird auf dem Kopf getragen, so dass die Anzeige 104 vor den Augen des Zustellers 200 angeordnet ist. In dem Fahrzeuginnenraum 202 ist ein Regal 204 angeordnet, in dem verschiedene Paketlieferungen 205 angeordnet sind. Zusätzlich ist in dem Regal 204 eine bestimmte Paketlieferung 201 angeordnet. Die Paketlieferung 201 soll von dem Zusteller 200 zugestellt werden.

Die Position der Paketlieferung 201 in dem Regal 204 ist in dem Speicher 102 des tragbaren Systems 100 gespeichert. Die Position ist in dem beschriebenen Ausführungsbeispiel durch das Regalfach angegeben, in dem die Paketlieferung 201 liegt. Die Datenbrille fragt hierbei aus dem Speicher 102 die Positionsinformation anhand eines der Paketlieferung 201 zugeordneten Codes, wie beispielsweise einer Liefernummer, ab.

Die Sensoranordnung 201 erfasst die Position des tragbaren Systems 100 in dem Fahrzeuginnenraum 202. Zusätzlich erfasst die Sensoranordnung 101, in welche Richtung das tragbare System 100 ausgerichtet ist. Da das tragbare System 100 vor den Augen des Zustellers 200 angeordnet ist, wird durch das Erfassen der Ausrichtung des tragbaren Systems 100 die Blickrichtung des Zustellers 200 erfasst. Entspricht die Ausrichtung des tragbaren Systems 100 einer Ausrichtung so, dass ausgehend von der Position der Sensoranordnung 101 und somit der Position des tragbaren Systems 100 die Paketlieferung 201 in Blickrichtung des Zustellers 200 liegt, so berechnet der Prozessor 103, in welchem Bereich der Anzeige 104 die Paketlieferung 201 liegt. Hierbei wertet er die Positionsinformation über die Position der Paketlieferung 201 und zusätzlich die Daten aus der Sensoranordnung 101 aus, so dass er einen Hinweis 203 generieren kann, der aus Sicht des Zustellers 200 mit der Position der Paketlieferung 201 übereinstimmt. Dieser Hinweis 203 wird dann auf der Anzeige 104 angezeigt. Hierbei projiziert die Anzeige 104 auf die Scheibe der Datenbrille den Hinweis 203. Dies sieht dann für den Zusteller 200 so aus, als würde der Hinweis 203 unmittelbar an der Paketlieferung 201 erscheinen. Dies ist in Fig. 2a dargestellt.

Fig. 2b zeigt den Zusteller 200, der die Paketlieferung 201 trägt und in den Fahrzeuginnenraum 202 einsortieren will. In dem Fahrzeuginnenraum 202 ist das Regal 204 angeordnet, in dem unterschiedliche Paketlieferungen 205 bereits einsortiert sind. Der Zusteller 200 trägt das tragbare System 100. Wie zu Fig. 2a beschrieben, handelt es sich in diesem Ausführungsbeispiel bei dem tragbaren System 100 um eine Datenbrille. In dem Speicher 102 ist in diesem Fall nicht die Ist-Position der Paketlieferung 201 gespeichert, sondern eine Soll-Position, d. h. ein freier Platz in dem Regal 204, an den der Zusteller 200 die Paketlieferung 201 platzieren soll.

Der Prozessor 103 wertet hierfür Positionsinformation aus dem Speicher 102 aus, um eine freie Position in dem Regal 204 zu finden. Im beschriebenen Ausführungsbeispiel wertet der Prozessor 103 aus dem Speicher 102 eine Position aus, die als "frei" markiert ist, d.h. eine Position, zu der in dem Speicher 102 noch keine Paketlieferung 201, 205 zugeordnet ist. In einem weiteren Ausführungsbeispiel vergleicht der Prozessor 103 Positionsinformationen über Positionen der anderen Paketlieferungen 205, die in dem Regal 204 bereits angeordnet sind, und berechnet aus den Positionen der anderen Paketlieferungen 205 freie Positionen in dem Regal 204 und wählt hieraus eine aus, die groß genug ist, um die Paketlieferung 201 aufzunehmen.

Der Prozessor 103 berechnet aus der Positionsinformation, d. h. der Soll-Position für die Paketlieferung 201, und der durch die Sensoranordnung 101 erfassten Ausrichtung des tragbaten Systems 100, wie zu Fig. 2a beschrieben, einen Hinweis, der auf der Anzeige 104 des tragbaren Systems 100 so eingeblendet wird, dass aus Sicht des Zustellers der Hinweis des Prozessors 103 an der freien Position in dem Regal 204 eingeblendet wird. Der Zusteller 200 kann nun die Paketlieferung 201 dank des Hinweises 203 an die freie Position in dem Regal 204 stellen.

Das tragbare System 100 erkennt, dass die Paketlieferung 201 in dem Regal 204 an der korrekten Position angeordnet ist, indem die Positionsinformation mit der Position der Paketlieferung 201 verglichen wird. Hierfür fixiert der Zusteller 200 einen Code, beispielsweise einen Barcode oder einen anderen zweidimensionalen Code, beispielsweise einen QR-Code, der Paketlieferung 201 auf der Paketlieferung 201 für eine vorbestimmte Zeit, beispielsweise zwei Sekunden, an. Das tragbare System 100 erkennt durch das statische Anvisieren und das Ausbleiben einer Änderung der Ausrichtung der Sensoranordnung 101, dass eine Erfassung eines Codes erfolgen soll. Da der Prozessor 103 zuvor eine leere Position in dem Regal 204 durch den Hinweis 203 angezeigt hat, weiß das tragbare System 100, dass der nun zu erfassende Code die Bestätigung der Ablage der Paketlieferung 201 sein soll. Die Sensoranordnung 101 erfasst den Code der Paketlieferung 201 und bucht so die Paketlieferung 201 in dem Regal 204 an der vorgegebenen Position ein.

In einem weiteren Ausführungsbeispiel erfolgt das Bestätigen und Einbuchen der Paketlieferung 201 zu der vorgegebenen Position durch Erfassen eines RFID-Chips an der Paketlieferung 201 oder durch eine Kamera in dem Regal 204, die den Code an der Paketlieferung 201 automatisch beim Einschieben der Paketlieferung in das Regal 204 erfasst. In einem weiteren Ausführungsbeispiel wird die Bestätigung durch Aktivieren eines Schalters oder Knopfes durch den Zusteller 200 ausgelöst.

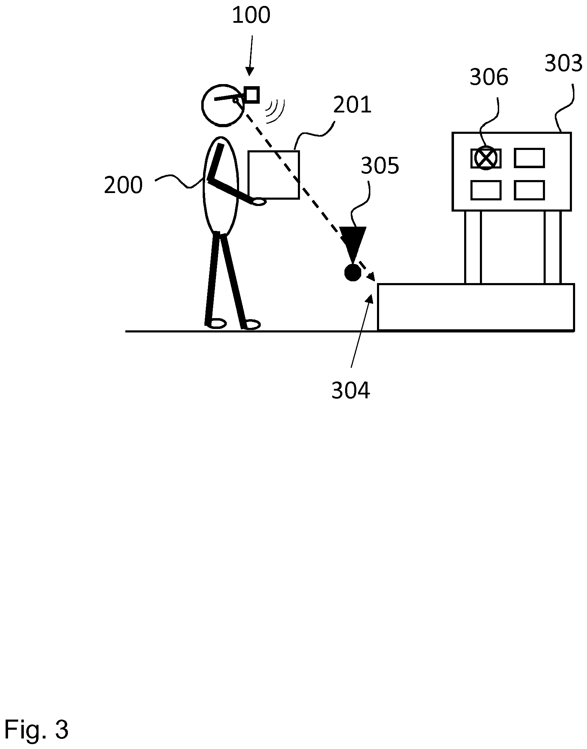

Fig. 3 zeigt den Zusteller 200 bei der Auslieferung der Paketlieferung 201. Der Zusteller 200 trägt hierbei das tragbare System 100. Das tragbare System 100 weist in dem in Fig. 3 dargestellten Ausführungsbeispiel zusätzlich zu den zu den Fig. 2a und/oder 2b beschriebenen Eigenschaften in der Sensoranordnung 101 eine Kamera zum Erfassen der Umgebung des tragbaren Systems 100 auf. Die Sensoranordnung 101 erfasst somit auch die Umgebung des Zustellers 200.

Die Sensoranordnung 101 erfasst eine Bordsteinkante 304 und einen Klingelkasten 303. Der Klingelkasten 303 umfasst mehrere Klingeln mit Namensschildern. Um die Paketlieferung 201 zuzustellen, muss der Zusteller 200 die Bordsteinkante 304 überschreiten und die korrekte Klingel mit dem Namen des Empfängers der Paketlieferung 201 drücken.

Das System 100 erfasst die Bordsteinkante 304. Hierfür werden Strukturen der Umgebung ausgewertet. Der Prozessor 103 erkennt anhand der Daten der Sensoranordnung 101 eine gerade Kante als Struktur auf dem Boden und ordnet diese gerade Kante einem Bordstein 304 zu. Um den Zusteller 200 auf diese Stolperfalle aufmerksam zu machen, wird ein Hinweis 305 so eingeblendet, dass in Blickrichtung des Zustellers 200 die Anzeige 104 den Hinweis 305 so einblendet, dass er zwischen den Augen des Zustellers 200 und der Bordsteinkante 304 eingeblendet ist. Für den Zusteller 200 sieht dies dann so aus, als würde das tragbare System 100 unmittelbar die Bordsteinkante 304 markieren.

Da der Hinweis 305 jedoch auf der Anzeige 104 des tragbaren Systems 100 direkt vor den Augen des Zustellers 200 eingeblendet wird, kann der Prozessor 103 durch Interpolation der Bewegung die von der Sensoranordnung 101 erfasst wird, den Hinweis 305 auch dann in Blickrichtung auf die Bordsteinkante 304 berechnen und durch die Anzeige 104 anzeigen lassen, wenn sich Gegenstände, wie beispielsweise die Paketlieferung 201, zwischen den Augen des Zustellers 200 und der Bordsteinkante 304 befinden (gestrichelte Linie). Versperrt also die Paketlieferung 201 die Sicht des Zustellers 200 auf die Bordsteinkante 304, so wird ihm trotzdem dank des tragbaren Systems 100 ein Warnhinweis 305, wie beispielsweise eine rote Linie oder ein Ausrufezeichen, an der Position eingeblendet, an der sich die Bordsteinkante 304 befindet. So kann das tragbare System 100 beispielsweise auch den Bordstein als Bild oder als stilisierte Darstellung auf die Paketlieferung 201 projizieren, so dass der Zusteller 200 die Bordsteinkante 304 auch dann sehen bzw. erkennen kann, wenn seine Sicht auf die Bordsteinkante 304 durch die Paketlieferung 201 verdeckt ist.

Durch die Sensoranordnung 101 erfasst das tragbare System 100 des Weiteren die Klingelschilder, die auf dem Klingelkasten 303 angeordnet sind. Hierbei erkennt der Prozessor 103 die Schriftzüge der Namen auf den Klingelschildern. Durch eine Schrifterkennung berechnet der Prozessor 103 aus diesen Schriftzügen die Namen auf den Klingelschildern. Durch einen Vergleich dieser so erfassten Namen mit einem zu der Paketlieferung 201 hinterlegten Empfängernamen kann der Prozessor 103 berechnen, an welcher Klingel des Klingelkastens der Zusteller 200 drücken muss. Dies kann dem Zusteller 200 wieder in der oben beschriebenen Art und Weise angezeigt und ein Hinweis 306 bereitgestellt werden, so dass der Zusteller 200 direkt die Klingel markiert sieht, mit der er bei dem Empfänger klingeln kann. Dies ist insbesondere dann sinnvoll, wenn die Paketlieferung 201 an einen Empfänger in einem Mehrfamilien- oder Hochhaus zugestellt werden soll, bei dem es eine hohe Anzahl, beispielsweise 50, verschiedener Parteien gibt.

Das tragbare System 100 umfasst des Weiteren eine Navigationsfunktion, um den Zusteller 200 von dem zustellfahrzeug bis zum Empfänger der Paketlieferung 201 zu führen. Hierfür erfasst die Sensoranordnung 101 die örtliche Position mittels einer an sich bekannten Technik, beispielsweise GPS oder GALILEO. Auf Basis dieser Positionsdaten und der hinterlegten Adresse kann das tragbare System 100 einen navigationsvorschlag bereitstellen, der über die Anzeige 104 ausgegeben werden kann, beispielsweise als Linie oder Pfeile auf dem Boden.

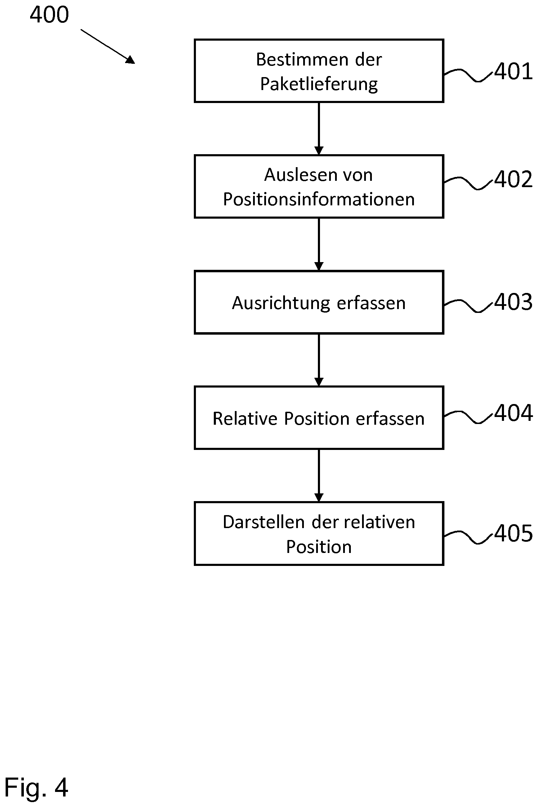

Fig. 4 zeigt eine schematische Darstellung eines Flussdiagramms 400 für ein Verfahren gemäß einer Ausgestaltung der Erfindung.

Im Schritt 401 wird bestimmt, welche Paketlieferung 201 ausgeliefert werden soll. Hierfür kommuniziert das tragbare System 100 über eine Datennetzwerkschnittstelle (in den Figuren nicht dargestellt) mit einer Zustellsoftware, die die Paketlieferung 201 zu der Zustellroute festlegt.

Im Schritt 402 liest das tragbare System 100 eine Positionsinformation über eine Position der Paketlieferung 201 in dem Fahrzeuginnenraum 202 aus einem Speicher 102 des tragbaren Systems 100 aus. Hierbei liest das tragbare System 100 die Position der Paketlieferung 201 in dem Regal 204 in dem Fahrzeuginnenraum 202 des Zustellfahrzeugs aus.

Im Schritt 403 erfasst das tragbare System 100 eine Ausrichtung des tragbaren Systems 100 in dem Fahrzeuginnenraum 202 durch die Sensoranordnung 101. Hierbei wird wie oben beschrieben eine relative Position des tragbaren Systems 100 in dem Fahrzeuginnenraum 202 erfasst. Beschleunigungssensoren der Sensoranordnung 101 werten zusätzlich die Neigung des tragbaren Systems 101 aus. Insbesondere wird die Neigung der Anzeige 104 ausgewertet.

Im Schritt 404 erfasst der Prozessor 103 eine relative Position der Paketlieferung 201 in Abhängigkeit von der Positionsinformation zu der Paketlieferung 201 sowie der erfassten Ausrichtung des tragbaren Systems 100. Die relative Position umfasst den Abstand und die Richtung der Paketlieferung 201 von der Anzeige 104 aus.

In einem folgenden Schritt 405 wird auf der Anzeige 104 des tragbaren Systems 100 ein Hinweis 203 auf die erfasste relative Position dargestellt. In weiteren Ausführungsbeispielen kann die Darstellung zusätzlich oder alternativ weitere Hinweise, wie die Hinweise 305 und 306 gemäß Fig. 3, umfassen. Im beschriebenen Ausführungsbeispiel erfolgt die Darstellung im Schritt 405 durch ein Projektionsverfahren mit einer transparenten Scheibe, insbesondere einer Scheibe eines Brillenglases, als Träger für die Projektion. Hierbei wird durch einen Projektor, der sich in dem tragbaren System 100 befindet, ein Bild des Hinweises 203 perspektivisch auf die Scheibe der Anzeige 104 projiziert. Somit sieht der Zusteller 200 beim Blick durch die Datenbrille hindurch seine Umgebung als Realität und zusätzlich die auf die Scheibe projizierten Hinweise. Der Zusteller 200 sieht somit eine erweiterte Realität.

In einer alternativen Ausgestaltung findet die Darstellung auf einem Bildschirm statt und erzeugt somit ein virtuelles Systems, das mit den Hinweisen der augmentierten Realität erweitert wird.

In einer weiteren zusätzlichen oder alternativen Ausgestaltung weist die Anzeige einen Lautsprecher, insbesondere Kopfhörer, auf um einen Hinweis akustisch darzustellen. Die akustische Darstellung kann hierbei eine Frequenzänderung und/oder eine Lautstärkenänderung bzw. eine Pegeländerung des akustischen Signals umfassen. Ebenso kann der Hinweis eine Erklärung beinhalten, die die Position der Paketlieferung 201 beschreibt, beispielsweise: "Die gesuchte Paketlieferung befindet sich links neben Ihnen auf Augenhöhe". Das tragbare System 100 kann eine derartige Unterstützung zusätzlich zu der oben beschriebenen optischen Unterstützung oder als alleinige Unterstützung aufweisen.

### BEZUGSZEICHENLISTE

- 100: tragbares System
- 101: Sensoranordnung
- 102: Speicher
- 103: Prozessor
- 104: Anzeige
- 200: Zusteller
- 201, 205: Paketlieferung
- 202: Fahrzeuginnenraum
- 203, 305, 306: Hinweis
- 204: Regal
- 303: Klingelkasten
- 304: Bordsteinkante
- 400: Flussdiagram
- 401-405: Verfahrensschritte

## Patentansprüche

1. Tragbares System (100) zum Unterstützen eines Zustellers (200) einer Paketlieferung (201) in einem Fahrzeuginnenraum (202) eines Zustellfahrzeugs bei Auslieferung der Paketlieferung (201), mit:
einem Speicher (102), in welchem eine Positionsinformation über eine Position der Paketlieferung (201) in dem Fahrzeuginnenraum (202) gespeichert ist;
einer Sensoranordnung (101), die dazu eingerichtet ist, eine Ausrichtung des tragbaren Systems (100) in dem Fahrzeuginnenraum (202) erfassen;
einem Prozessor (103), welcher ausgebildet ist, eine relative Position der Paketlieferung (201) in Abhängigkeit von der Positionsinformation sowie der erfassten Ausrichtung zu erfassen; und
einer Anzeige (104), welche ausgebildet ist, die erfasste relative Position darzustellen.

2. Tragbares System (100) nach Anspruch 1, wobei das tragbare System (100) eine Datenbrille umfasst.

3. Tragbares System (100) nach einem der vorhergehenden Ansprüche, wobei die Anzeige (104) zumindest teilweise transparent ist.

4. Tragbares System (100) nach einem der Ansprüche 1 oder 2, wobei die Anzeige elektronisch ist und dazu eingerichtet ist, eine Darstellung des Fahrzeuginnanraums (202) in Abhängigkeit der Ausrichtung des Systems und eine Überlagerung der relativen Position elektronisch darzustellen.

5. Tragbares System (100) nach einem der vorhergehenden Ansprüche, wobei die Anzeige (104) einen Lautsprecher umfasst, wobei die Anzeige (104) dazu eingerichtet ist, die die erfasste relative Position durch akustische Signale darzustellen.

6. Tragbares System (100) nach einem der vorhergehenden Ansprüche, wobei die Anzeige (104) ein Brillenglas oder eine Kontaktlinse oder ein Headset umfasst.

7. Tragbares System (100) nach einem der vorhergehenden Ansprüche, wobei die Positionsinformation eine Ist-Position umfasst, an der die Paketlieferung (201) angeordnet ist und wobei die Anzeige (104) dazu eingerichtet ist, die relative Position anzuzeigen um einen Lagerort der Paketlieferung (201) anzuzeigen.

8. Tragbares System (100) nach einem der vorhergehenden Ansprüche, wobei die Positionsinformation eine Soll-position umfasst, an der die Paketlieferung (201) anordenbar ist wobei die Anzeige (104) dazu eingerichtet ist, die relative Position anzuzeigen um einen vorbestimmten Lagerort der Paketlieferung (201) anzuzeigen, an dem die Paketlieferung (201) gelagert werden soll.

9. Tragbares System (100) nach einem der vorhergehenden Ansprüche, wobei die Sensoranordnung (101) dazu eingerichtet ist, eine Umgebung des tragbaren Systems (100) zu erfassen und wobei der Prozessor (103) dazu eingerichtet ist, Strukturen in der erfassten Umgebung zu erkennen und einen Gefahrenhinweis für eine Struktur bereitzustellen, die einer Gefahr für den Zusteller (200) zuordenbar ist und wobei die Anzeige (104) dazu eingerichtet ist, den Gefahrenhinweis darzustellen.

10. Tragbares System (100) nach einem der vorhergehenden Ansprüche, wobei die Sensoranordnung (101) dazu eingerichtet ist, eine Umgebung des tragbaren Systems zu erfassen und wobei der Prozessor (103) dazu eingerichtet ist, Schriftzüge in der erfassten Umgebung zu erkennen, die Schriftzüge mit einem der Paketlieferung (201) zugeordneten Namen abzugleichen und einen Hinweis bereitzustellen, wenn der Name in einem Schriftzug erkannt wurde und wobei die Anzeige (104) dazu eingerichtet ist, den Hinweis darzustellen.

11. Tragbares System (100) nach einem der vorhergehenden Ansprüche, wobei die Sensoranordnung (101) dazu eingerichtet ist, einen Erkennungscode der Paketlieferung (201) zu erfassen, der der Paketlieferung (201) zugeordnet ist, wenn die Sensoranordnung (101) den Erkennungscode in einem vorbestimmten Abstand zur Sensoranordnung (101) und/oder für eine vorbestimmte Zeit und/oder in einer vorbestimmten Position relativ zu der Sensoranordnung erfasst, wobei der Prozessor (103) dazu eingerichtet ist, einen Bestätigungshinweis zu generieren, wenn der Erkennungscode der auszuliefernden Paketlieferung (201) erfasst wurde, und wobei die Anzeige (104) dazu eingerichtet ist, den Bestätigungshinweis darzustellen.

12. Tragbares System (100) nach einem der vorhergehenden Ansprüche, mit einem Erfassungssensor zum Erfassen der Position der Paketlieferung (201) in dem Fahrzeuginneren, insbesondere umfassend eine Kamera und/oder einen RFID-Sensor.

13. Tragbares System (100) nach einem der vorhergehen Ansprüche, wobei die Sensoranordnung (101) einen Positionssensor umfasst, der dazu eingerichtet ist, eine Position des tragbaren Systems (100) außerhalb des Fahrzeuginnenraums (202) zu erfassen.

14. Verfahren zum Unterstützen eines Zustellers (200) einer Paketlieferung (201) in einem Fahrzeuginnenraum (202) eines Zustellfahrzeugs bei Auslieferung der Paketlieferung (201) durch ein tragbares System (100), mit:
Auslesen einer Positionsinformation über eine Position der Paketlieferung (201) in dem Fahrzeuginnenraum (202) aus einem Speicher (102) des tragbaren Systems (100);
Erfassen einer Ausrichtung des tragbaren Systems (100) in dem Fahrzeuginnenraum (202) durch eine Sensoranordnung (101) des tragbaren Systems (100);
Erfassen einer relativen Position der Paketlieferung (201) in Abhängigkeit von der Positionsinformation sowie der erfassten Ausrichtung durch einen Prozessor (103) des tragbaren Systems (100);
Darstellen der erfassten relativen Position durch eine Anzeige (104) des tragbaren Systems (100).

15. Computer-Programm-Produkt mit einem Programmcode zur Ausführung des Verfahrens nach Anspruch 14, wenn der Programmcode auf einem Computersystem ausgeführt wird.

## Geänderte Patentansprüche

### Geänderte Patentansprüche gemäss Regel 137(2) EPÜ.

1. Tragbares System (100) zum Unterstützen eines Zustellers (200) einer Paketlieferung (201) in einem Fahrzeuginnenraum (202) eines Zustellfahrzeugs bei Auslieferung der Paketlieferung (201), mit:
einem Speicher (102), in welchem eine Positionsinformation über eine Position der Paketlieferung (201) in dem Fahrzeuginnenraum (202) gespeichert ist;
einer Sensoranordnung (101), die dazu eingerichtet ist, eine Ausrichtung des tragbaren Systems (100) in dem Fahrzeuginnenraum (202) erfassen;
einem Prozessor (103), welcher ausgebildet ist, eine relative Position der Paketlieferung (201) in Abhängigkeit von der Positionsinformation sowie der erfassten Ausrichtung zu erfassen; und
einer Anzeige (104), welche ausgebildet ist, die erfasste relative Position darzustellen; und
wobei die Sensoranordnung (101) dazu eingerichtet ist, eine Umgebung des tragbaren Systems (100) zu erfassen und wobei der Prozessor (103) dazu eingerichtet ist, Strukturen in der erfassten Umgebung zu erkennen und einen Gefahrenhinweis für eine Struktur bereitzustellen, die einer Gefahr für den Zusteller (200) zuordenbar ist und wobei die Anzeige (104) dazu eingerichtet ist, den Gefahrenhinweis darzustellen.

2. Tragbares System (100) nach Anspruch 1, wobei das tragbare System (100) eine Datenbrille umfasst.

3. Tragbares System (100) nach einem der vorhergehenden Ansprüche, wobei die Anzeige (104) zumindest teilweise transparent ist.

4. Tragbares System (100) nach einem der Ansprüche 1 oder 2, wobei die Anzeige elektronisch ist und dazu eingerichtet ist, eine Darstellung des Fahrzeuginnanraums (202) in Abhängigkeit der Ausrichtung des Systems und eine Überlagerung der relativen Position elektronisch darzustellen.

5. Tragbares System (100) nach einem der vorhergehenden Ansprüche, wobei die Anzeige (104) einen Lautsprecher umfasst, wobei die Anzeige (104) dazu eingerichtet ist, die die erfasste relative Position durch akustische Signale darzustellen.

6. Tragbares System (100) nach einem der vorhergehenden Ansprüche, wobei die Anzeige (104) ein Brillenglas oder eine Kontaktlinse oder ein Headset umfasst.

7. Tragbares System (100) nach einem der vorhergehenden Ansprüche, wobei die Positionsinformation eine Ist-Position umfasst, an der die Paketlieferung (201) angeordnet ist und wobei die Anzeige (104) dazu eingerichtet ist, die relative Position anzuzeigen um einen Lagerort der Paketlieferung (201) anzuzeigen.

8. Tragbares System (100) nach einem der vorhergehenden Ansprüche, wobei die Positionsinformation eine Soll-position umfasst, an der die Paketlieferung (201) anordenbar ist wobei die Anzeige (104) dazu eingerichtet ist, die relative Position anzuzeigen um einen vorbestimmten Lagerort der Paketlieferung (201) anzuzeigen, an dem die Paketlieferung (201) gelagert werden soll.

9. Tragbares System (100) nach einem der vorhergehenden Ansprüche, wobei die Sensoranordnung (101) dazu eingerichtet ist, eine Umgebung des tragbaren Systems zu erfassen und wobei der Prozessor (103) dazu eingerichtet ist, Schriftzüge in der erfassten Umgebung zu erkennen, die Schriftzüge mit einem der Paketlieferung (201) zugeordneten Namen abzugleichen und einen Hinweis bereitzustellen, wenn der Name in einem Schriftzug erkannt wurde und wobei die Anzeige (104) dazu eingerichtet ist, den Hinweis darzustellen.

10. Tragbares System (100) nach einem der vorhergehenden Ansprüche, wobei die Sensoranordnung (101) dazu eingerichtet ist, einen Erkennungscode der Paketlieferung (201) zu erfassen, der der Paketlieferung (201) zugeordnet ist, wenn die Sensoranordnung (101) den Erkennungscode in einem vorbestimmten Abstand zur Sensoranordnung (101) und/oder für eine vorbestimmte Zeit und/oder in einer vorbestimmten Position relativ zu der Sensoranordnung erfasst, wobei der Prozessor (103) dazu eingerichtet ist, einen Bestätigungshinweis zu generieren, wenn der Erkennungscode der auszuliefernden Paketlieferung (201) erfasst wurde, und wobei die Anzeige (104) dazu eingerichtet ist, den Bestätigungshinweis darzustellen.

11. Tragbares System (100) nach einem der vorhergehenden Ansprüche, mit einem Erfassungssensor zum Erfassen der Position der Paketlieferung (201) in dem Fahrzeuginneren, insbesondere umfassend eine Kamera und/oder einen RFID-Sensor.

12. Tragbares System (100) nach einem der vorhergehen Ansprüche, wobei die Sensoranordnung (101) einen Positionssensor umfasst, der dazu eingerichtet ist, eine Position des tragbaren Systems (100) außerhalb des Fahrzeuginnenraums (202) zu erfassen.

13. Verfahren zum Unterstützen eines Zustellers (200) einer Paketlieferung (201) in einem Fahrzeuginnenraum (202) eines Zustellfahrzeugs bei Auslieferung der Paketlieferung (201) durch ein tragbares System (100), mit:
Auslesen einer Positionsinformation über eine Position der Paketlieferung (201) in dem Fahrzeuginnenraum (202) aus einem Speicher (102) des tragbaren Systems (100);
Erfassen einer Ausrichtung des tragbaren Systems (100) in dem Fahrzeuginnenraum (202) durch eine Sensoranordnung (101) des tragbaren Systems (100);
Erfassen einer relativen Position der Paketlieferung (201) in Abhängigkeit von der Positionsinformation sowie der erfassten Ausrichtung durch einen Prozessor (103) des tragbaren Systems (100);
Darstellen der erfassten relativen Position durch eine Anzeige (104) des tragbaren Systems (100);
Erfassen einer Umgebung des tragbaren Systems (100) durch die Sensoranordnung (101);
Erkennen von Strukturen in der erfassten Umgebung und Bereitstellen eines Gefahrenhinweises für eine Struktur, die einer Gefahr für den Zusteller (200) zuordenbar ist durch den Prozessor (103); und
Darstellen des Gefahrenhinweises durch die Anzeige (104).

14. Computer-Programm-Produkt mit einem Programmcode zur Ausführung des Verfahrens nach Anspruch 13, wenn der Programmcode auf einem Computersystem ausgeführt wird.
